# EUROPEAN PATENT SPECIFICATION

(11) **EP 1 064 138 B1**
(45) Date of publication and mention of the grant of the patent: **18.09.2002**
(21) Application number: 99904663.4
(22) Date of filing: 15.02.1999
(51) Int. Cl.: B29C 45/28, B29C 45/16

(54) **VALVE GATING APPARATUS AND METHOD FOR INJECTION MOLDING**
VERSCHLUSSANGUSSVORRICHTUNG UND SPRITZGIESSVERFAHREN
DISPOSITIF D'ENTREE A OBTURATEUR ET PROCEDE DE MOULAGE PAR INJECTION

(30) Priority: 19.02.1998 US 75193 P; 25.02.1998 US 30593
(43) Date of publication of application: 03.01.2001
(73) Proprietor: Husky Injection Molding Systems Ltd., Bolton, Ontario L7E 5S5 (CA)
(72) Inventor: SCHAD, Robert, D., Toronto, Ontario M46 2V5 (CA); LAUSENHAMMER, Manfred, D-54329 Konz Niedermenning (DE); MAI, Arnold, D-54666 Irrel (DE)
(74) Representative: Beissel, Jean
(86) International application number: CA9900131
(87) International publication number: WO99042274

(56) References cited:
- WO-A-98/41378
- DE-B- 1 296 332
- US-A- 3 581 341
- US-A- 4 108 956
- PATENT ABSTRACTS OF JAPAN vol. 96, no. 10, 31 October 1996 & JP 08 142122 A (KOBE STEEL LTD), 4 June 1996
- PATENT ABSTRACTS OF JAPAN vol. 12, no. 64 (M-672), 26 February 1988 -& JP 62 211119 A (ISHII KOGYO KK), 17 September 1987
- PATENT ABSTRACTS OF JAPAN vol. 10, no. 175 (E-413), 20 June 1986 & JP 61 024241 A (NIPPON DENKI KK), 1 February 1986
- PATENT ABSTRACTS OF JAPAN vol. 12, no. 404 (M-757), 26 October 1988 & JP 63 147619 A (NEC CORP), 20 June 1988

## Description

### FIELD OF THE INVENTION

The present invention relates to a valve gating apparatus and a method of valve gating for use with injection molds. More specifically, the present invention relates to an apparatus and method for laterally gating the flow of molten materials from an injection molding nozzle into a mold cavity.

### BACKGROUND OF THE INVENTION

It is well known in the field of injection molding that some means must be provided to inhibit the flow of molten material into the cavity of a mold so that the mold may be cooled and opened to remove the molded part. There are essentially two broad categories of inhibiting techniques known in the field of injection molds, namely: thermal gating, wherein the gate at the exit of the nozzle is rapidly cooled at the completion of the injection operation to form a solid or semi-solid plug of the material being injected at the gate; and valve gating, wherein a mechanical means is employed to inhibit the flow of material being injected into the mold cavity. Each category has its own advantages and disadvantages relative to the other and numerous systems for thermal gating and for valve gating are known.

Valve gating systems are generally of one of two types, namely inline and lateral systems, although a wide variety of systems of each type have been developed. In inline systems, a valve stem aligned with the gate is moved, parallel to the direction of movement of molten material (generally referred to as "melt") through the gate, between a position wherein the stem extends into the gate to block further flow through the gate and a position wherein the stem is retracted from the gate to permit flow therethrough into the mold cavity. In order to be aligned with the gate, the valve stem is located inside the injection nozzle and is at least partially within the flow path of the melt.

For these, and other reasons, inline valve gating suffers from a variety of problems. One common problem is wear of the valve stem due to contact with the nozzle and/or gate, which can lead to misalignment of the stem and thus leaking or failure of the valve. Another common problem is the conversion of the melt from the tubular flow entering the nozzle to an annular (or other non-continuous) flow which is caused by the valve stem or other related components being within the melt flow. Such a non-continuous flow can result in weld or knot lines in the molded product produced as the melt flow recombines within the gate or mold cavity and this can result in weakened or unacceptable molded products. Some examples of relatively recent inline systems which attempt to address these and/or other problems include U.S. Patents 4,412,807 to York, 4,925,384 to Manner and 5.254.305 to Fernandez et al.

In lateral valve gating systems, a valve member is moved across the melt flow before or after the gate to block or allow flow through the gate. While lateral gating systems can avoid the misalignment, reliability and divided melt flow problems of inline valve gating systems, they suffer from their own problems and disadvantages. For example, a lateral valve gating system which is located too far from the mold cavity can result in unacceptable sprue vestiges being formed on the molded parts.

Another problem with gating systems in general is that the melt material in the melt channel of the mold cavity, adjacent the gate, experiences a different cooling regime than the remainder of the melt in the cavity. Specifically, as the nozzle is heated to maintain the melt in a molten condition, the melt material in the melt channel of the mold cavity adjacent the gate is cooled less efficiently than the rest of material in the mold cavity as some heat is transferred from the melt in the gate. Many melt materials degrade or otherwise develop undesired characteristics when exposed to a poor cooling regime. For example, in the specific case of PTE, the material can exhibit crystalinity when exposed to a poor cooling regime and/or increased levels of acetyl aldehyde can be produced.

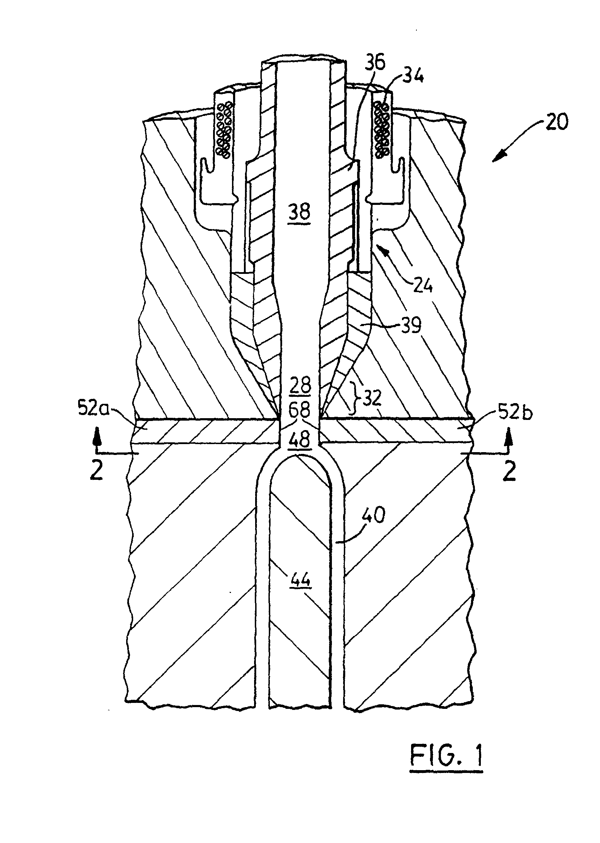

U.S. Patent 4,108,956 to Lee shows, in the embodiments of Figures 1, 2 and 3, a lateral gating mechanism comprising a valve gate in the form of a pair of slidable plates with a bore there through. When the bore in these plates is aligned with the gate, melt material can flow into the mold cavity from the nozzle. When the injection operation is complete, the plates are moved laterally to move the bore out of alignment with the gate and further flow of melt into the cavity is prevented. The patent teaches that the advantage afforded by the plates is that they provide thermal insulation between the gate in the nozzle and the cooled mold to inhibit undesired thermal transmission therebetween, thus mitigating the poor cooling of the melt in the mold cavity adjacent the gate. Accordingly, the plates are of selected thickness and materials to provide the desired thermal insulating characteristics. In fact, the patent teaches that a pair of plates, each overlying the other, are employed with the plate adjacent the manifold plate being formed of a thermally insulating material and the plate adjacent the mold being formed of a heat conductive material.

However, as with many other lateral gating mechanisms, the device taught in Lee suffers from some associated disadvantages. In particular, some melt material is carried in the bore in the plates when they are moved to the position to inhibit melt flow and this material forms a cold plug therein. This results in two disadvantages, namely that some melt material is wasted on each closing operation and that some provision must be made to remove and discard the cold plugs from the bore before the plates are returned to the position to enable melt flow. Generation of waste is unacceptable in many applications such as when molding PET preforms or in a clean room environment. The addition of the means to remove and discard cold plugs is not acceptable in a multi-cavity mold. Therefore, the Lee patent does not represent a feasible approach.

U.S. Patents 3,288,903 to Hendry, 3,599,290 to Garner, 3,632,729 to Biefeldt and 3,809,519 to Garner shown other examples of known lateral gating systems. These patents are mostly used to regulate the flow of melt from an injection machine. Therefore, the disadvantages of Lee '956, which are common for in-mold gating only, do not represent a major problem.

U.K. Patent 1,369,744, while not teaching a lateral gating system, does show in the embodiments shown in Figures 1 through 8 of the reference, a pair of valves which are located upstream from the gate and which comprise lateral shuttles. These shuttles are forced from the closed position (i.e. - where melt flow is inhibited) to the open position by pressure exerted by the melt which counteracts an applied hydraulic pressure. The valves are used to switch materials to be injected, and are not used to control melt flow out of the gate and into the cavity. Further, as the gate is well downstream of the shuttles, a significant amount of melt is downstream of the shuttles and large, undesired, sprue vestiges can result on molded parts as this melt material is still in contact with the mold cavity. Also, these shuttles are actuated by a pressure differential between a hydraulic cylinder and the melt flows. This actuating mechanism cannot provide an accurate gating of multiple nozzles and would not be suitable for location within an injection mold due to the volume occupied by the mechanism and as hydraulic leaks, which are inevitable with prolonged use, are not tolerable in a mold.

Another problem of all conventional gating systems is that the gate is of a constant size. Presently, in all of the gating systems of which the present inventors are aware, the cross-sectional area of the gate is constant and thus limits the rate of melt flow into a mold cavity. In some circumstances, it is desired to inject different materials and/or different amounts of those materials into the mold cavity, such as in coinjection situations. In such cases, the mold designer must select a gate size which is a compromise between the optimal size for each material and/or amount of material.

In other circumstances, it is desired to inject a material or materials at different rates. For example, a cantilevered mold core such as that used in molding blow molding preforms from PET can be shifted laterally in a mold cavity by the melt material which enters the cavity at the beginning of the injection operation. In conventional systems, the cavity is filled at a substantially constant rate as the cross-sectional area of the gate and the feed pressure of the melt from the injection machine are substantially constant. Accordingly, melt material enters the cavity at a substantially constant pressure and velocity. If the mold gate size could be altered, melt could initially enter the cavity at a reduced pressure and/or velocity until some melt surrounds a portion of the mold core and then the gate can be resized to allow the remaining melt to enter at a higher pressure and/or velocity.

Also, with the prior art gating systems when a mold cavity is changed to mold a different part, it can be required to change the gates of the mold to larger or smaller gates to accommodate the new melt flow requirements. If the size of the mold gate in the mold could be altered, the time required to change the cavities could be reduced.

The document Patent Abstracts of Japan, vol.96, no. 10 (& JP-A-08 142122) discloses a valve gating apparatus wherein a shutter is movably arranged in a recess in the mold plate. The recess extends from an outer surface of the mold plate to a melt passage in the mold plate. An actuator is associated with the shutter to move the shutter substantially perpendicular to the direction of melt flow through the melt passage between a first position, in which said shutter is retracted and the melt passage is opened, and a second position, in which the shutter cooperates with the bottom wall of the recess for closing the melt passage.

It is desired to have an apparatus and method of lateral gating for use in injection molding operations which provides the advantages of lateral gating without at least some of the drawbacks normally associated therewith. Further, it is desired to have an apparatus and method of lateral gating which permits the cross-sectional area of the gate to be altered. This alteration of the cross-sectional area of the gate allows melt to be injected under different conditions, such as different flow rates and/or pressures.

### SUMMARY OF THE INVENTION

It is an object of the present invention to provide a novel valve gating apparatus for use in injection molding operations.

The present invention provides a valve gating apparatus for an injection mold nozzle assembling including a melt channel and a nozzle gate, said valve gating apparatus being positioned between the nozzle gate and a mold cavity, comprising:
a least one shutter moveable between a first position wherein said gate is in fluid communication with said mold cavity and a second position wherein said shutter inhibits flow of melt material from said nozzle gate;
means to move said shutter substantially perpendicular to the direction of melt flow through said nozzle gate between said first and second positions.

According to the invention, the shutter comprises a body with an aperture therethrough defining a melt flow path and a sealing edge, said aperture receiving a sealing post adjacent said nozzle gate therein, said sealing edge of said shutter abutting said sealing post in said second position to inhibit flow of melt and said sealing edge being distal said sealing post in said first position

The present invention provides a novel lateral valve gating apparatus and method of operating an injection mold. Thermal insulating properties can be enhanced between cooling melt in the mold cavity and hot melt in the injection nozzle and sprue vestiges can be reduced or eliminated. The valve gates constructed in accordance with the present invention have good reliability and are not subject to exceptional wear. Further, the gate of a nozzle can be throttled to a reduced cross-sectional area to permit injected flow characteristics to be established as desired. Also, each melt channel of a multi-material nozzle can be gated as desired.

The present invention also provides the ability to gate multiple mold nozzles with a single shutter, or pair of shutters. This can render the present invention particularly size and cost efficient. Specifically, a shutter, or pair of shutters, require much less volume within an injection mold than many prior art valve gating systems which required separate actuators for each nozzle. This can allow a mold or machine designer to locate nozzles in a closer spacing and/or employ more nozzles than otherwise. Further, the shutters, or pairs of shutters, in accordance with the present invention are less expensive to deploy, due largely to the simplicity of the fabrication of the shutters, and the reduced number of actuators required to operate the shutters and can reduce the cost of constructing such a machine or mold.

Further, by employing a shutter or pair of shutters to gate multiple nozzles, accurate and easily controlled gating of those multiple nozzles is ensured.

Also, an important benefit is that the shutter or shutters employed with the present invention do not carry melt material when closed, material waste at the valve gate is reduced or eliminated and special means for removing and disposing of such waste material need not be provided.

### BRIEF DESCRIPTION OF THE DRAWINGS

Preferred embodiments of the present invention will now be described, by way of example only, with reference to the attached Figures, wherein:
Figure 1 shows a cross section of a portion of a injection nozzle and a lateral gate element comprising a pair of shutters, in accordance with a first embodiment of the present invention, adjacent a mold cavity and wherein the shutter is in an open position;
Figure 2 shows a section taken along line 2-2 of Figure 1 with gates of square cross-section;
Figure 2a shows a section taken along line 2-2 of Figure 1 with a gate of circular cross-section;
Figure 3 shows the shutter of Figure 1 in a closed position;
Figure 4 shows a section taken along line 4-4 of Figure 3;
Figures 5(a) through 5(d) show configurations of shutters in accordance with the present invention;
Figure 6 shows a cross section of a portion of a injection nozzle and a shutter, in accordance with another embodiment of the present invention, adjacent a mold cavity and wherein the shutter is in an open position;
Figure 7 shows a section taken along line 7-7 of Figure 6;
Figure 8 shows the shutter of Figure 6 in a closed position;
Figure 9 shows a section taken along line 9-9 of Figure 8;
Figure 10 shows a cross section of two injection nozzles and a shutter in accordance with another embodiment of the present invention and wherein the shutter is in an open position;
Figure 11 shows a section taken along line 11-11 of Figure 10;
Figure 12 shows the shutter of Figure 10 in a closed position;
Figure 13 shows a section taken along line 13-13 in Figure 12;
Figure 14 shows a cross section of a portion of an injection nozzle and a shutter in accordance with another embodiment of the present invention, adjacent a mold cavity and wherein the shutter is in an open position;
Figure 15 shows the shutter of Figure 14 in a closed position;
Figure 16 shows a cross section of a portion of an injection nozzle and a pair of shutters in accordance with another embodiment of the present invention, adjacent a mold cavity and wherein the shutter is in an open position;
Figure 17 shows the shutters of Figure 16 in a closed position;
Figure 18 shows a schematic representation of a embodiment of an actuator to move a shutter in accordance with the present invention;
Figure 19 shows a schematic representation of three shutters mounted in a frame and an actuator to move the frame in accordance with the present invention;
Figure 20 shows a shutter in accordance with an embodiment of the present invention with a two dimensional array of apertures for gating an array of nozzles;
Figure 21 shows a section similar to that of Figure 10, but including a circular gate and an appropriate shutter therefore;
Figure 22 shows the shutter of Figure 21 in the closed position;
Figure 23 shows a pair of shutters in the closed position to gate a three-melt channel nozzle;
Figure 24 shows the shutters of Figure 23 in a position wherein one gate of the three-melt channel nozzle is open and two gates are closed;
Figure 25 shows a single shutter for use with a two melt channel nozzle in the closed position;
Figure 26 shows the shutter of Figure 25 in a first open position; and
Figure 27 shows the shutter of Figure 25 in a second open position.

### DETAILED DESCRIPTION OF THE INVENTION

A portion of an injection mold in accordance with a first embodiment of the present invention is indicated generally at 20 in Figure 1. Figure 1 shows a hot runner injection nozzle assembly 24, for use in mold 20. A mold gate 28 is adjacent the nozzle tip 32 of a nozzle 36. Nozzle 36 is in thermal contact with one or more heater elements 34, which can be wound, band, ceramic or any other suitable heater element, and includes a melt channel 38 through which melt material from an injection machine flows. The melt material exits melt channel 38 in nozzle 36 through gate 28 and an insulating member 39 helps thermally isolate the melt from mold plate 20.

A mold cavity 40 with a mold core 44 is connected to mold gate 28 by an entrance 48 to mold cavity 40. Between the nozzle tip 32 and entrance 48 to mold cavity 40 is a valve, formed of a pair of lateral gate shutters 52a, 52b in accordance with a first embodiment of the present invention.

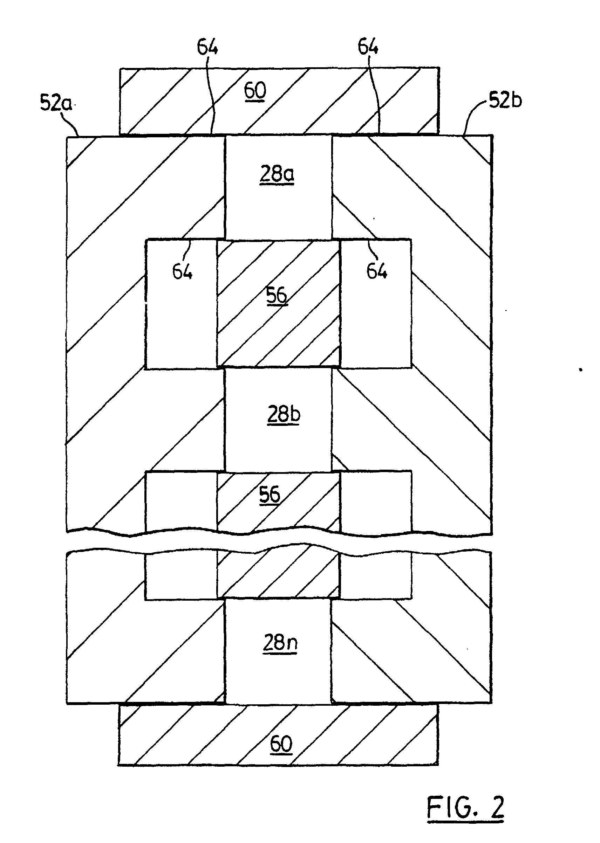

In Figure 1, shutters 52 are in the open position whereby melt from nozzle assembly 24 can be injected into mold cavity 40 through gate 28 and entrance 48 to mold cavity 40. Figure 2, which is a section taken along line 2-2 in Figure 1 shows the relationship between the gates 28a through 28n of an array of N nozzles and shutters 52a and 52b. While the present invention can be employed with a single nozzle assembly 24, it is contemplated that it will be most useful with multi-cavity or large single-cavity molds, wherein a plurality of nozzle assemblies 24 will be employed, each operated by shutters 52.

In the embodiment shown Figure 2, gates 28a, 28b and 28n each have a substantially square cross section. Figure 2a shows the system of Figure 2 but wherein gate 28 is round in cross-section. In Figure 2, a seal member 56 is located between each pair of gates 28 and an end seal member 60 is provided against the otherwise open edge of gate 28a and 28n. In the illustrated embodiment, end seal member 60 is a separate piece but it is also contemplated that seal member 60 can be a portion of shutter 52a and/or shutter 52b. As will be apparent to those of skill in the art, the perimeter of gates 28a and 28n are enclosed on one side by end seal member 60, on the next side by shutter 52a, on the next side by seal member 56 and on the last side by shutter 52b. The perimeter of gates 28 between adjacent nozzles, such as gate 28b, are enclosed by seal members 56 and shutters 52a and 52b.

In Figure 2a, the perimeter of gate 28, and "dead zones" 54 described below, are enclosed by end seal member 60, shutter 52a, seal member 56 and shutter 52b. As shown in this figure, some melt will accumulate at the dead zones. By moving the two shutters 52a and 52b this material is pushed back into the mold or the nozzle. Therefore, no waste will be generated. Any known means such as pneumatic pistons and resilient spring means can activate shutters 52a and 52b.

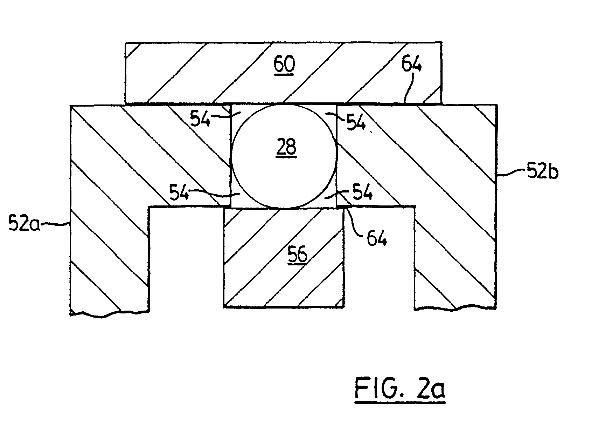

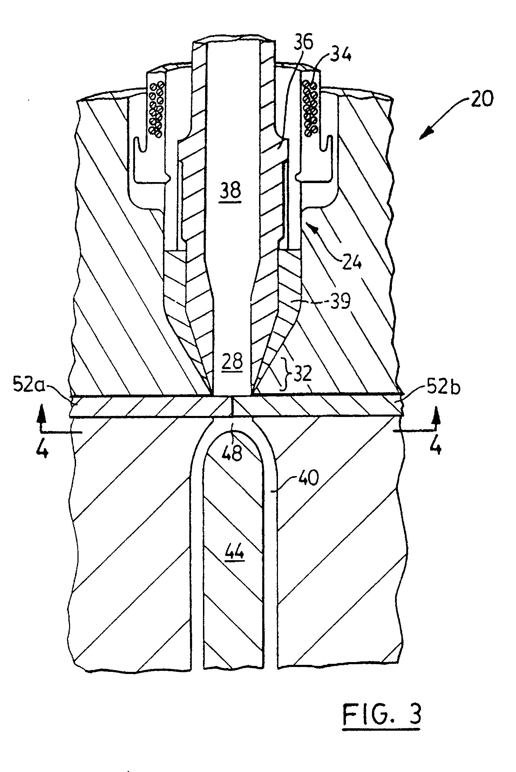

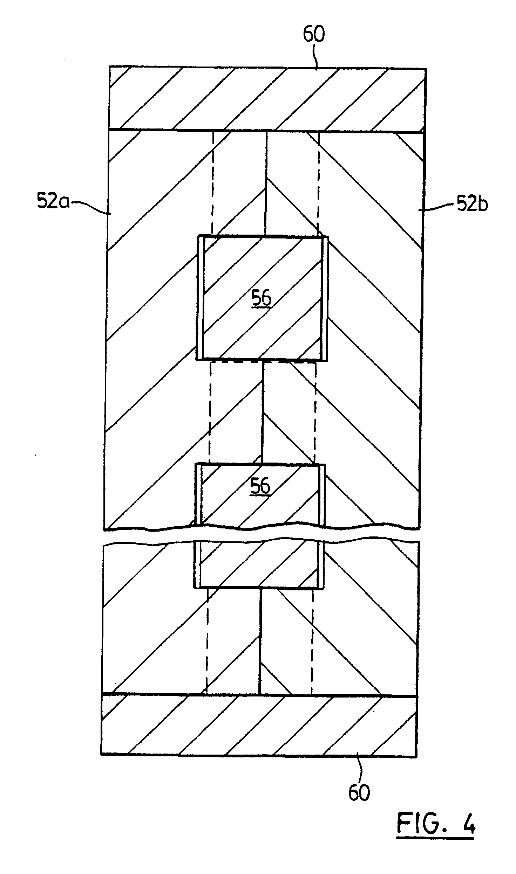

Figure 3 shows the nozzle of Figure 1 when shutters 52a and 52b are in the closed position wherein melt from nozzle 36 is prevented from entering entrance 48 to mold cavity 40 and cavity 40. Figure 4 shows a section taken along line 4-4 of Figure 3 showing how gates 28 are blocked when shutters 52a and 52b are in the closed position. As will be apparent to those of skill in the art, and as is further discussed below, shutters 52a and 52b can be placed in a plurality of positions intermediate the illustrated open and closed positions to "throttle" gate 28 as desired and to thus effectively create a gate of a desired cross-sectional size.

The function of shutters 52a and 52b, when used with a circular gate 28 as shown in Figure 2a, is essentially the same as when they are employed with gates of square cross-section. As will be apparent to those of skill in the art, when shutters 52a and 52b are in the open position shown in Figures 1 and 2, melt material can enter dead zones 54. However, as will also be apparent, as shutters 52a and 52b are moved to the closed position shown in Figure 4, melt material is swept out of dead zones 54 into gate 28 and entrance 48 by the leading edge of the shutters 52.

It is contemplated that shutters 52a and 52b, sealing members 56 and end sealing members 60 can be fabricated from a variety of materials and in a variety configurations. One of the contemplated advantages of the present invention is the thermal isolation which can be achieved between melt in gate 28 and melt in entrance 48 to mold cavity 40. Accordingly, shutters 52, sealing members 56 and end sealing members 60 can be fabricated from a suitable insulating material such as titanium or a ceramic such as zirconia oxide and/or coated with materials with desired heat transfer characteristics. For example, the surface of shutters 52 adjacent gate 28 can be coated with a heat reflective material such as chromium or silver while the surface of shutters 52 adjacent entrance 48 to mold cavity 40 can be coated with a heat conducting material such as copper or stainless steel.

A variety of factors influence the selection of the thickness of shutters 52. Generally, it is desired that shutters 52 be relatively thin to minimize the displacement of melt into nozzle assembly 24 and/or cavity 40 when shutters 52 are moved from the open position to the closed position. As will be apparent to those of skill in the art, shutters 52 will displace melt located between them as they close and this displaced melt will result in back pressure of melt into nozzle assembly 24 and/or cavity 40. The thinner shutters 52 can be made, the less melt is displaced. Conversely, shutters 52 must abut each other in the closed position to provide a reasonable seal against further flow of melt from nozzle assembly 24 to cavity 40 and thus shutters 52 must be sufficiently rigid to ensure sealing abutment occurs. Sufficient rigidity can be achieved in a variety of manners, including fabricating shutters 52 of sufficient gauge (thickness) material to ensure rigidity and/or supporting the side edges 64 of shutters 52 in complementary grooves (not shown) in seal members 56 and/or end seal members 60. In any event, generally the thickness of sealing members 56 and end sealing members 60 will be selected to correspond to the selected thickness of shutters 52.

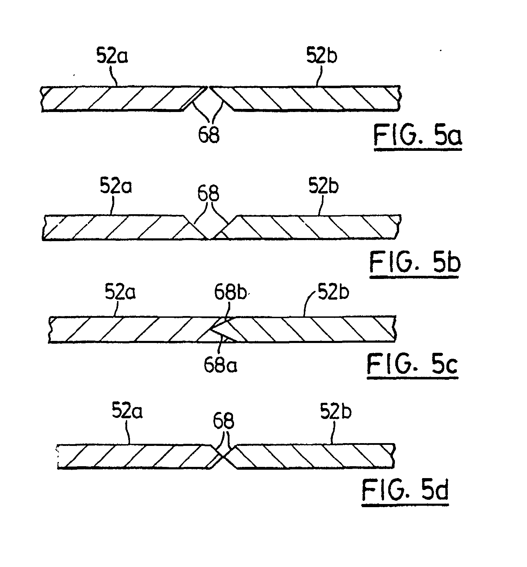

In the embodiment of Figures 1 through 4, and as best seen in Figures 1 and 3, the sealing edges 68 of shutters 52a and 52b are formed perpendicular to the plane of the shutters 52 and this provides a relatively large contact area between the shutters to achieve the desired seal. Figures 5(a) through 5(d) show some of the additional contemplated configurations of the sealing edges 68 of shutters 52. Figure 5(a) shows a configuration wherein sealing edges 68 are wedge-shaped, it is contemplated that this configuration will "cut" melt in gate 28 and will direct any melt displaced by the closing of shutters 52 into mold cavity 40. Figure 5(b) shows a similar, but inverted, configuration that will direct melt displaced by closing of shutters 52 into nozzle assembly 24. Figure 5(c) shows a configuration wherein the sealing edges 68 on each one shutter 52 is complementary to the other shutter 52. In this particular example, shutter 52b includes a wedge shaped sealing edge 68b which engages a complementary wedge-shaped groove in sealing edge 68a of shutter 52a. Figure 5(d) shows sealing edges 68 of shutters 52 with mirror-imaged wedge-like edges and this embodiment can be preferred when it is desired to "throttle" the size of gate 28.

One of the perceived advantages of employing two shutters 52 is that they can be moved to the throttle gate 28 such that the cross-sectional area of the resulting effective gate remains centered under tip 32.

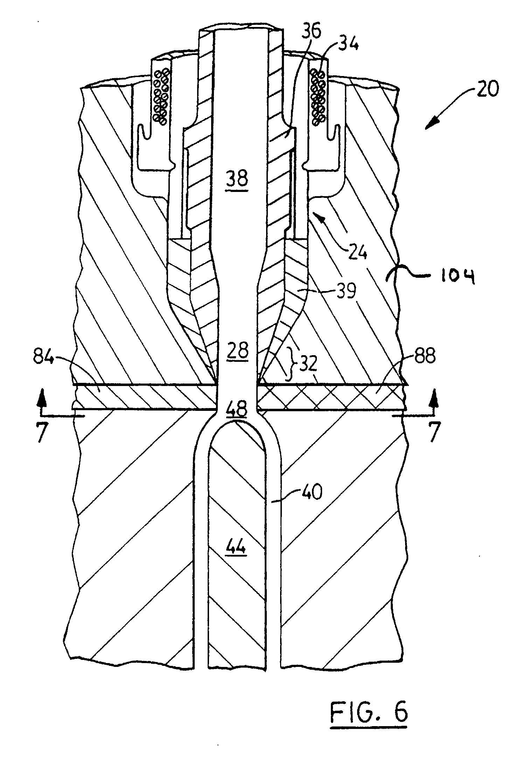

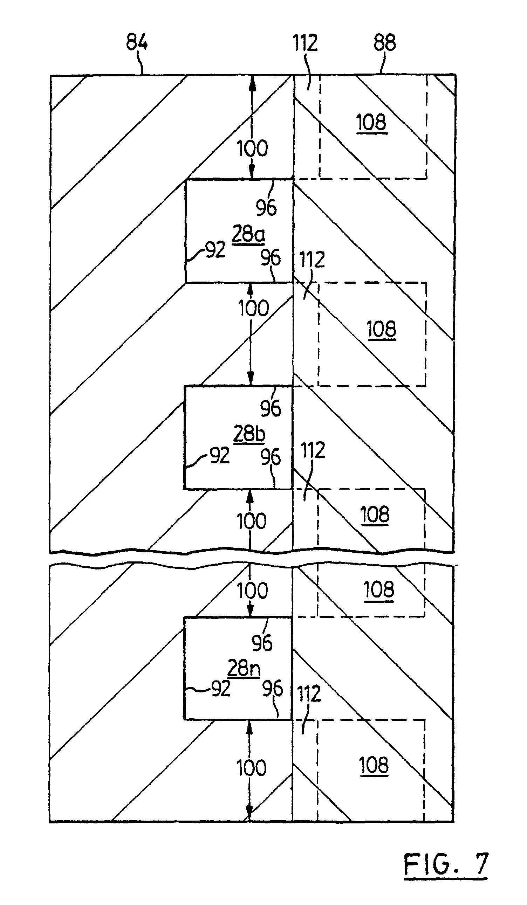

Figure 6 shows another embodiment of the present invention, indicated generally at 20, wherein like components to those shown in Figure 1 are indicated with like reference numerals. In this embodiment, only a single shutter 84 is employed. Figure 7, which is a section taken along line 7-7 in Figure 6, shows the relationship between the gates 28a through 28n of an array of nozzles and shutter 84. Again, while the present invention can be employed with a single nozzle assembly 24, it is contemplated that it will be most useful with multi-cavity molds or large single-cavity molds wherein a plurality of nozzle assemblies 24 will be employed. As shown in Figures 6 and 7, a seal member 88 is provided on the side of gates 28 opposite shutter 84.

As shown, shutter 84 includes seal edges 92 and pairs of side edges 96 which are formed on seal fingers 100. Seal member 88, which can be a separate member or can be directly formed in manifold plate 104, includes slots 108 into which a portion 112 of seal fingers 100 extend in the illustrated open position.

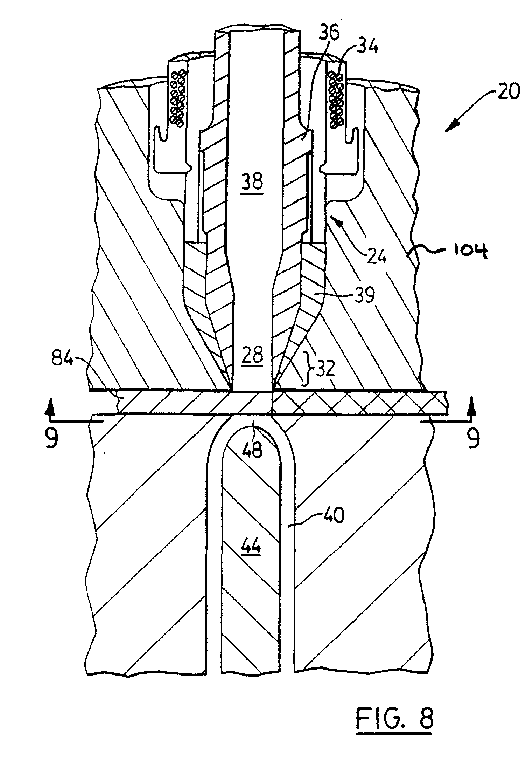

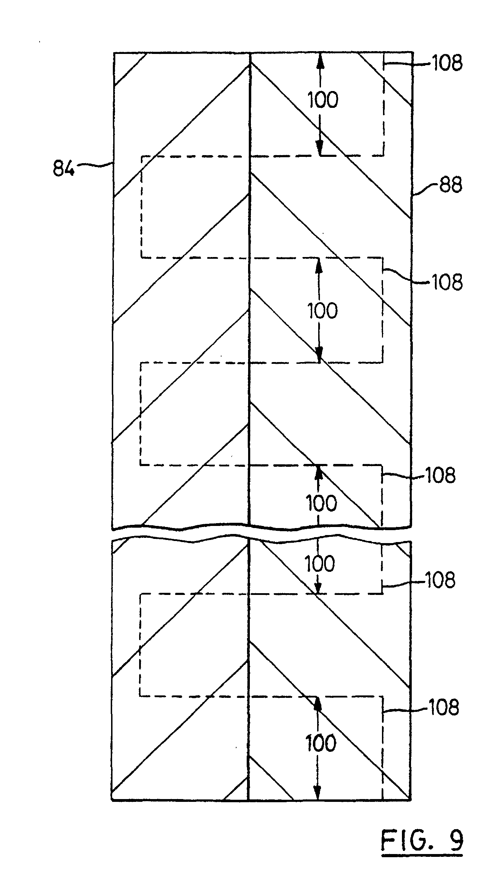

In the closed position, shown in Figures 8 and 9, shutter 84 is moved such that seal edge 92 abuts against seal member 88 and seal fingers 100 extend into slots 108 as shown. This embodiment is presently believed to provide advantages over that shown in Figures 1 through 4 in that only a single shutter 84 must be moved, and seal edges 92 are well supported, throughout their range of movement, by seal fingers 100.

As will be apparent to those of skill in the art, as with the previous embodiments of the present invention, if desired shutter 84 can be placed in any intermediate position between the illustrated open position and the illustrated closed position to provide a gate 28 with a different size, i.e. - a "throttled" gate. Further, shutter 84 can be fabricated from a variety of materials and/or coatings to achieve desired thermal properties and seal edge 92 can have a variety of configurations, as appropriate.

As will also be apparent to those of skill in the art, in the embodiment of Figures 6 through 9, gates 28 need not be square in cross-section in this embodiment and can instead be a conventional circular or other cross-section.

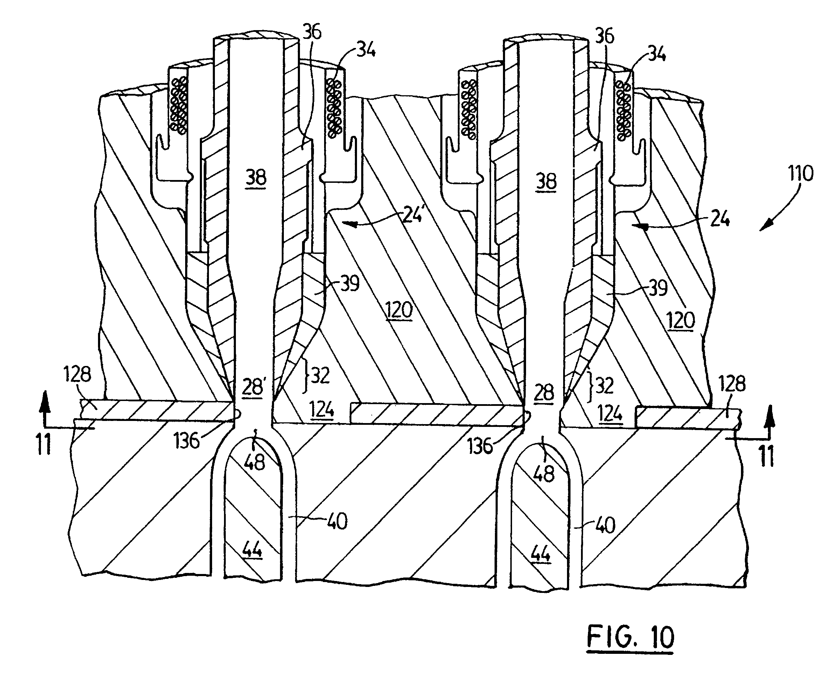

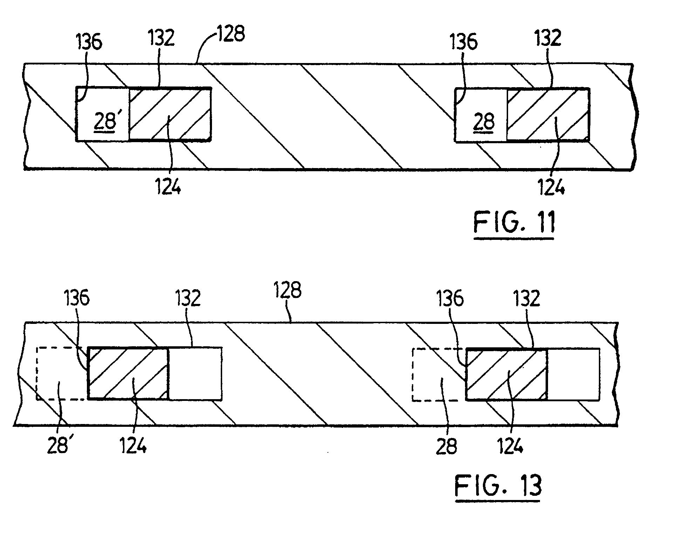

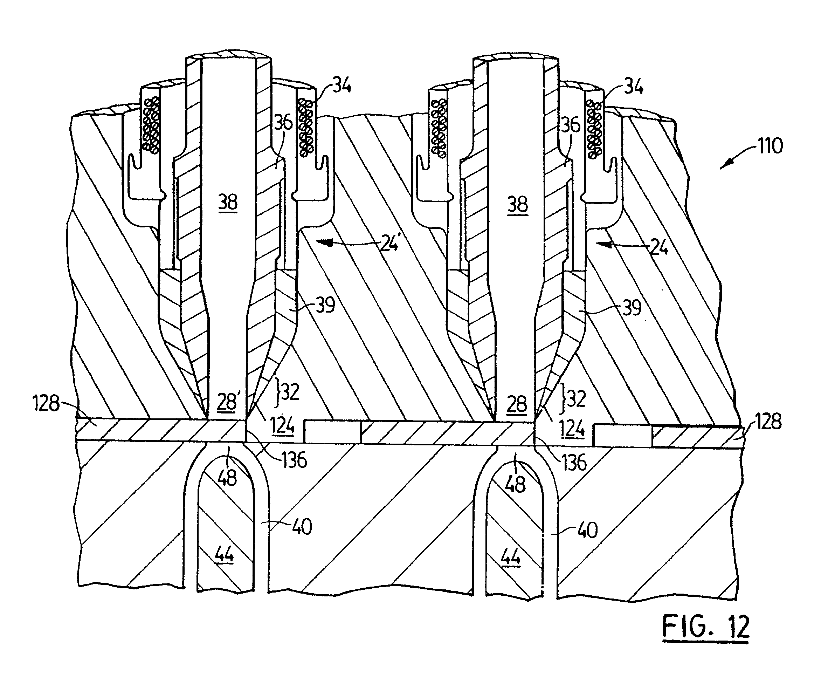

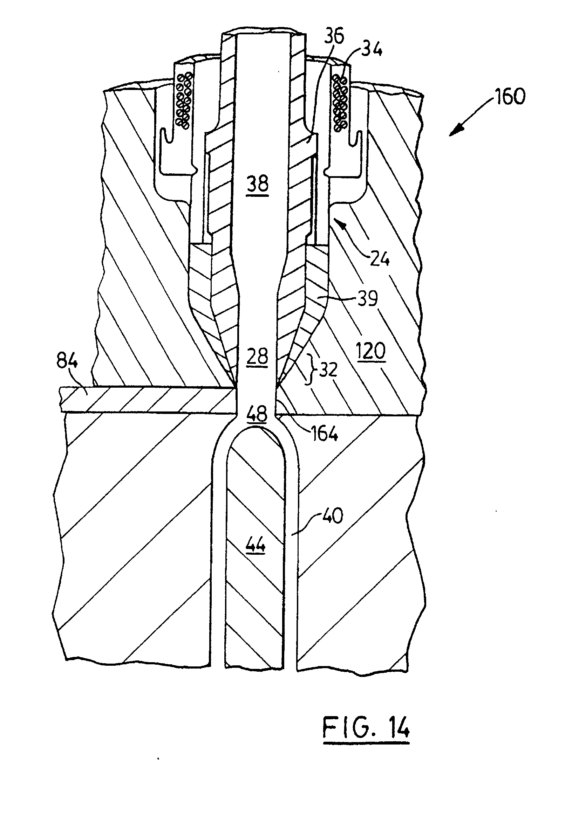

Figures 10 through 13 shows another embodiment of the present invention, indicated generally at 110, wherein like components to those shown in Figure 1 are indicated with like reference numerals. As shown in Figures 10 and 11, in this embodiment two nozzle assemblies 24 and 24' are located in manifold plate 120 and are gated by a single shutter 128. For each nozzle 24, 24', manifold plate 120 includes a sealing post 124, which can be integrally formed with plate 120 or which can be affixed thereto by any suitable means as will occur to those of skill in the art. Shutter 128 includes a rectangular slot 132 for each nozzle 24, 24' which is sized to correspond to the width of post 124 and gate 28 as shown and which includes a sealing edge 136. When it is desired to close gates 28 and 28', shutter 128 is moved to bring sealing edge 136 into contact with sealing post 124, as shown in Figures 12 and 13. As with the other embodiments of the present invention, shutter 128 can be placed in any desired position intermediate the open position of Figure 10 and the closed position of Figure 12 to alter the size of gates 28, 28' i.e. - to throttle gates 28, 28'. If multiple shutters 128 are to be employed, each shutter 128 gating one or more nozzles, they can be connected to a suitable frame allowing them to be moved synchronously between positions by a single actuating means, as described below.

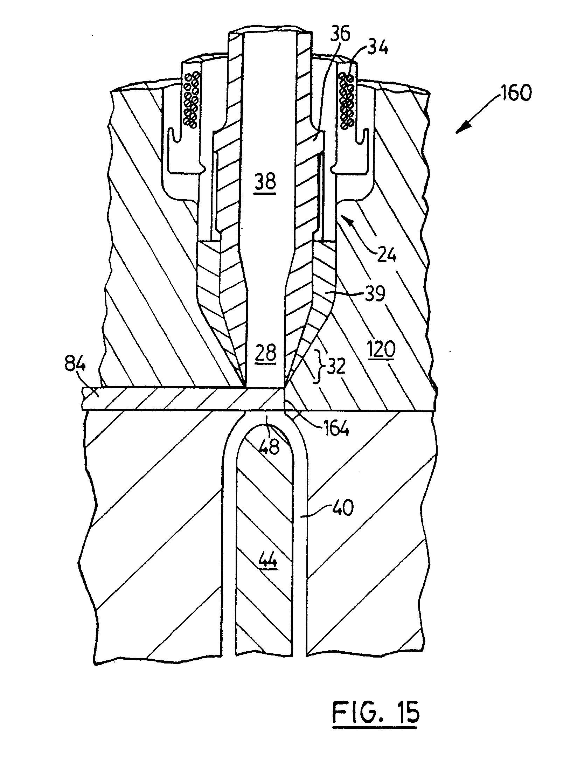

Figures 14 and 15 show another embodiment of the present invention, indicated generally at 160, wherein like components to those shown in Figure 1 are indicated with like reference numerals. In this embodiment, which is similar to that shown in Figures 6 through 8, on one side of gate 28 manifold plate 120 extends toward the mold cavity to form a surface with a edge 164 against which shutter in shutter 84 abuts in the closed position.

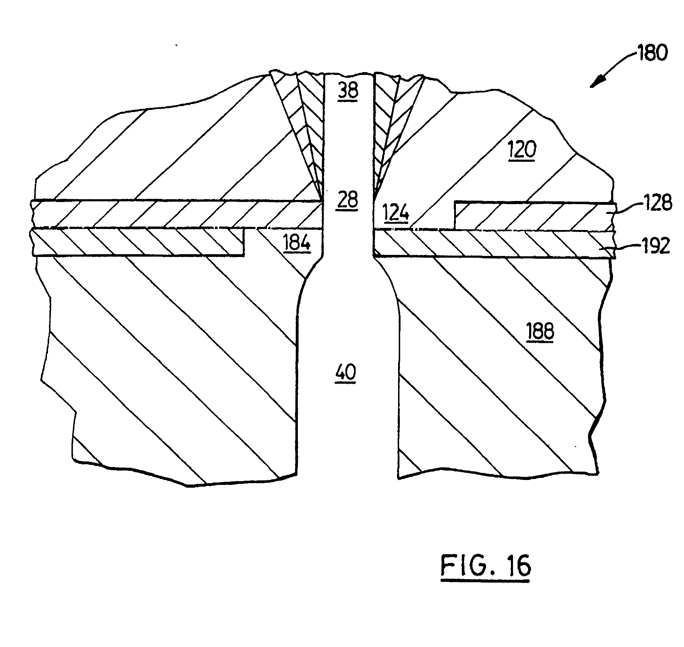

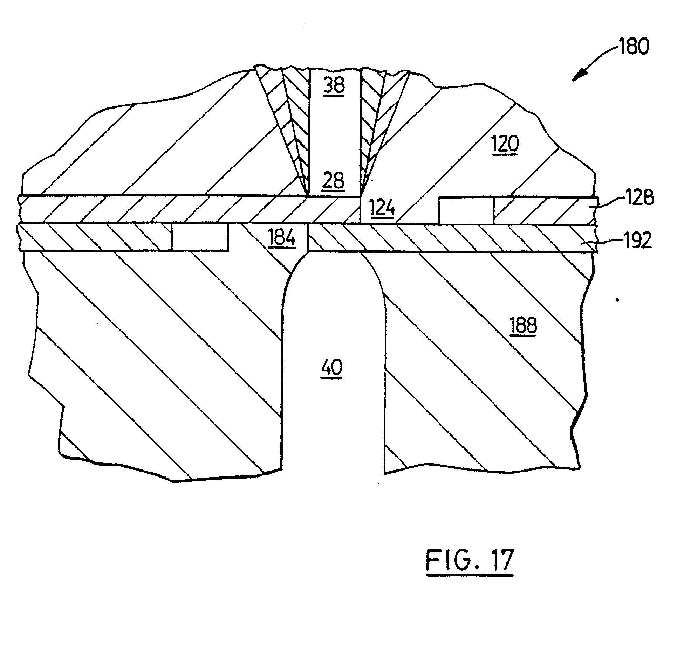

Figures 16 and 17 show another embodiment of the present invention, indicated generally at 180, wherein like components to those shown in Figure 1 are indicated with like reference numerals. In this embodiment, which is similar to that shown in Figures 10 through 13, a sealing post 124 is provided on manifold plate 120 and a second sealing post 184 is provided on cavity plate 188 on the opposite side of gate 28 from sealing post 124. A pair of shutters 128 and 192 are employed, each sealing against a respective one of sealing posts 124 and 184 in the closed position, as shown in Figure 17. This embodiment allows gate 28 to be located above the center of the through aperture formed by shutters 128, 192 when they are placed in a position intermediate the open and closed positions shown to throttle gate 28. Further, shutter 128 can be fabricated from a material with good thermal insulating properties, such as titanium or a ceramic material, and shutter 192 can be fabricated from a material with good thermal transfer properties to provide the desired thermal characteristics for cooling a part in cavity 40.

As will be apparent to those of skill in the art, the ability to gate multiple nozzles with a single shutter, or pair of shutters, can render the present invention particularly size and cost efficient. Specifically, a shutter, or pair of shutters, require much less volume within an injection mold than many prior art valve gating systems which required separate actuators for each nozzle. Thus, a machine and/or mold designer can employ more nozzles and/or space nozzles more closely, if desired.

Further, the shutters, or pairs of shutters, in accordance with the present invention are less expensive to deploy, due largely to the simplicity of the manufacture of the shutters, and the reduced number of actuators required to operate the shutters. Also, by gating a number of nozzles with a single shutter or pair of shutters, accurate and consistent gating of nozzles can be achieve relatively easily, ensuring that the same amount of melt material is supplied to each mold cavity.

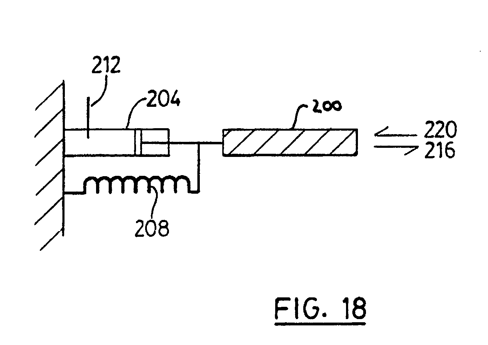

As will be apparent to those of skill in the art, operation of the shutters of the embodiments of the present invention can be accomplished in a wide variety of manners. For example, as shown schematically in Figure 18, a shutter 200 can be moved between open, throttled (intermediate) and closed positions by a hydraulic actuator 204 and return spring 208. Hydraulic fluid 212 can be supplied to cylinder 204 by any suitable means to move shutter 200 in the direction of arrow 216 and return spring 208 can move shutter 200 in the direction indicated by arrow 220 when hydraulic pressure is removed from cylinder 204. If more precise positioning is required, such as for throttling of melt flow in a very accurate manner, a mechanical worm drive, a stepper motor or any other suitable means as will occur to those of skill in the art can be employed.

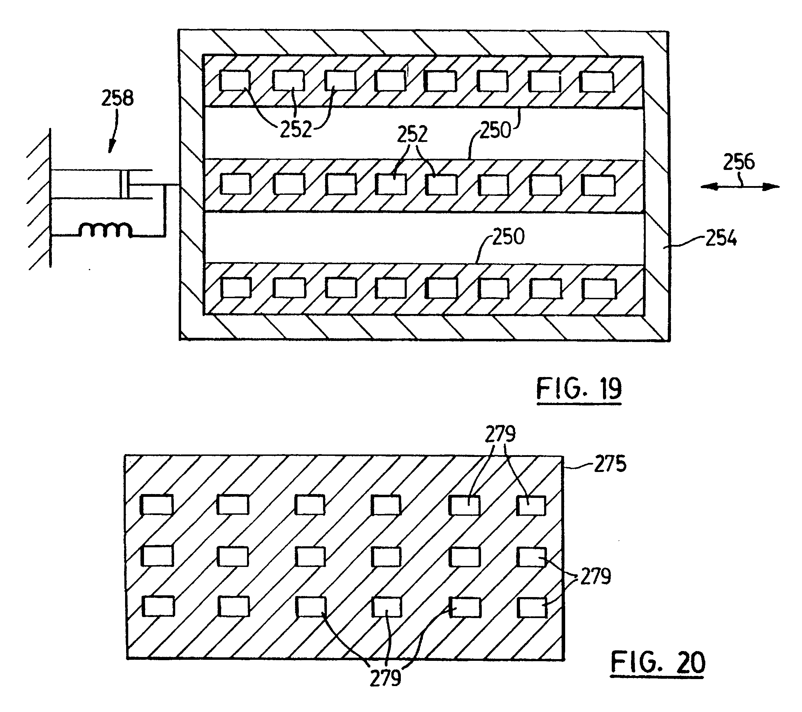

The present invention can be deployed in a variety of manners for multi-nozzle applications. As mentioned above, a shutter or a pair of shutters in accordance with the present invention can act to throttle or valve multiple nozzles. It is contemplated that, as shown in Figure 19, multiple shutters 250 can be mounted to a frame 254 which can then be moved in the direction indicated by arrow 256 by an actuator 258. If pairs of shutters 250 are employed, each having one or more apertures 252, one of each pair of shutters 250 is mounted in a frame 254 and the corresponding other of each pair of shutters 250 is mounted in a second frame 254 and the frames can be moved, as desired, by a corresponding one of a pair of actuators 258.

Figure 20 shows another embodiment of a shutter 275 in accordance with the present invention for use wherein a series of nozzles to be gated are arranged in an array. As shown in the Figure, shutter 275 is essentially a rectangular plate or sheet in which apertures 279 are formed in an arrangement corresponding to the positioning of the nozzles to be gated. An actuator, not shown, can be connected to shutter 275 in any appropriate manner.

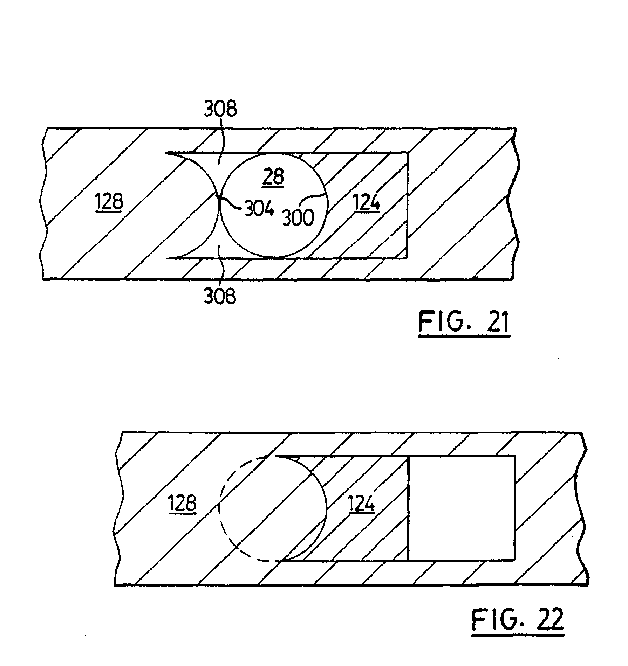

Figures 21 and 22 show another embodiment of the present invention which is similar to that discussed above with reference to Figures 10 through 14, but wherein gate 28 is circular. As shown in Figure 21 wherein shutter 128 is in the open position, sealing post 124 includes a semi-circular edge 300 which corresponds to the adjacent edge of gate 28. The leading edge 304 of shutter 128 is a complementary semi-circular shape which engages edge 300 in the closed position shown in Figure 22 to seal gate 28 as shown. As will be apparent to those of skill in the art, the semi-circular shape of edge 304 creates dead zones 308 into which melt can enter when an injection operation is performed, but such melt is swept from dead zones 304 when shutter 128 is moved to the closed position.

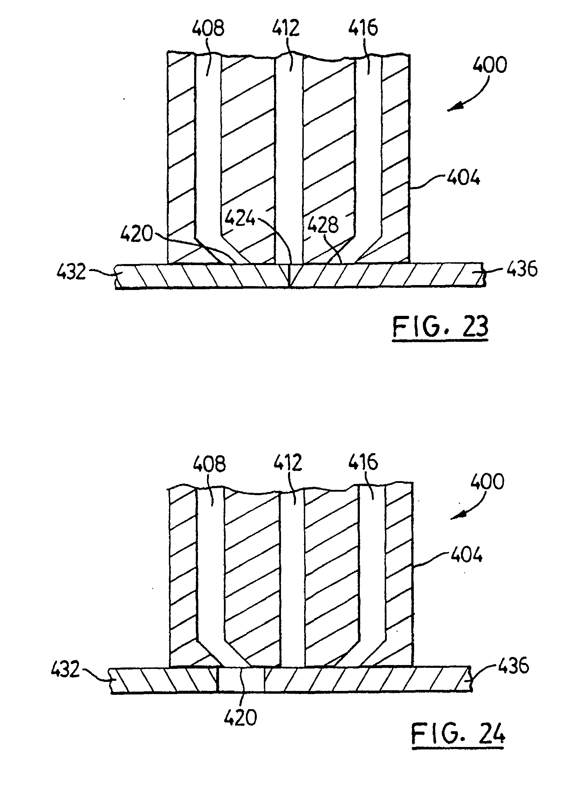

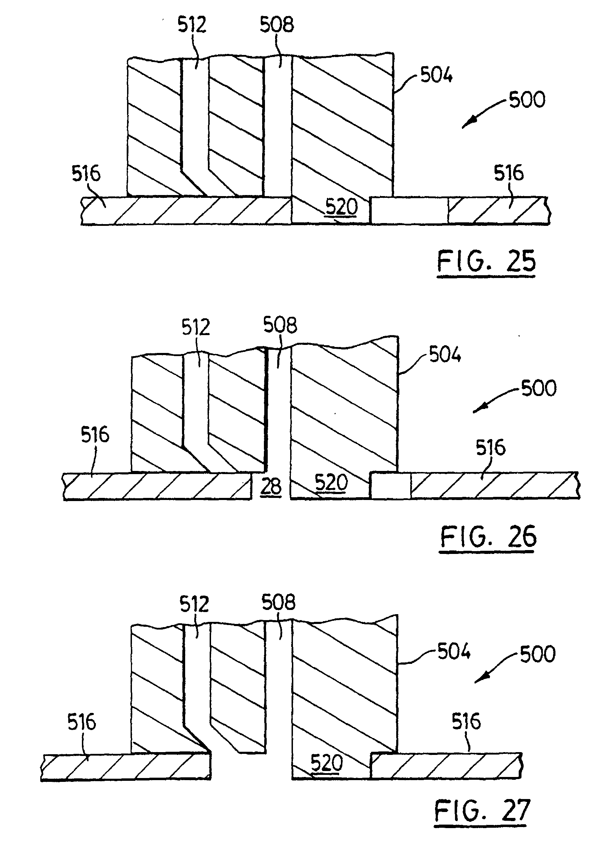

Figure 23 shows a dual shutter embodiment of the present invention, indicated generally at 400, with a nozzle 404 having three melt channels 408, 412 and 416. Each melt channel can supply one of a different melt material to gates 420, 424 and 428. Two shutters 432 and 436 are in the closed position in Figure 28 wherein all three gates 420, 424 and 428 are closed. In Figure 24, shutter 432 has been moved to the left, and shutter 436 has also been moved to the left, but to a lesser extent so that gate 420 is now open while gates 424 and 428 remain closed. As will be apparent to those of skill in the art, by properly positioning shutters 432 and 436 gates 420, 424 and 428 can be closed or one, any adjacent two, or all three of gates 420, 424 and 428 can be open, as desired. Further, shutters 432 and 436 can be positioned to throttle one or more of gates 420, 424 and 428, if desired. This novel design can be applied to form multi-layer preforms where one material could be virgin PET, and the second material could be recycled PET, and the third material could be a barrier such as EVOH, A manifold and injection molding machine capable of operating with these nozzles is described in U.S. Patent No. 4,863,665, incorporated herein by reference. The same approach could be used with a nozzle having two melt channels for different materials.

Figures 25, 26 and 27 show another embodiment of the present invention, indicated generally at 500, wherein a two material nozzle 504 includes a first melt channel 508 and a second melt channel 512. This embodiment can be used to valve injection operations wherein a first amount of the melt material in melt channel 508 is injected and then an amount of both the melt material in melt channel 508 and the melt material in channel 512 is simultaneously injected. Figure 25 shows the embodiment in the closed position wherein a shutter 516, similar to that shown in Figure 10, is in the closed position and abuts a sealing post 520. Figure 26 shows the embodiment in position for the first injection operation wherein shutter 516 has been moved to open communication between melt channel 508 and gate 28. Figure 27 shows the embodiment in position for the second injection operation wherein shutter 516 has been moved to open communication between both melt channels 508 and 512 and gate 28 for a simultaneous injection of melt materials. As will be apparent to those of skill in the art, if desired shutter 516 can be placed in intermediate positions wherein (i) melt channel 508 is throttled and melt channel 512 is closed and (ii) melt channel 508 is open and melt channel 512 is throttled.

While the embodiment of Figures 25 through 27 shows a shutter and a sealing post, it will be apparent to those of skill in the art that others of the embodiments described above can be employed with two melt channel nozzles, as desired.

The present invention provides a novel valve gating apparatus and method of operating an injection mold. Thermal insulating properties can be enhanced between cooling melt in the mold cavity and hot melt in the injection nozzle and sprue vestiges can be reduced or eliminated. The valves constructed in accordance with the present invention have good reliability and are not subject to exceptional wear. Further, in at least circumstances wherein multiple nozzles are to be gated, the present invention can be implemented in a relatively compact area and relatively less expensively than prior art systems which required a valve stem for each nozzle.

The above-described embodiments of the invention are intended to be examples of the present invention and alterations and modifications may be effected thereto, by those of skill in the art, without departing from the scope of the invention which is defined solely by the claims appended hereto.

## Claims

1. A valve gating apparatus for an injection mold nozzle assembly (24, 24') including a melt channel (38) and a nozzle gate (28, 28'), said valve gating apparatus being positioned between the nozzle gate (28, 28') and a mold cavity (40), comprising:
a least one shutter (128, 192, 250, 275, 516) moveable between a first position wherein said gate (28, 28') is in fluid communication with said mold cavity (40)and a second position wherein said shutter (128, 192, 250, 275, 516) inhibits flow of melt material from said nozzle gate (28, 28');
means to move said shutter (128, 192, 250, 275, 516) substantially perpendicular to the direction of melt flow through said nozzle gate (28, 28') between said first and second positions,
**characterized in that** said shutter (128, 192, 250, 275, 516) comprises a body with an aperture (132, 252, 279) therethrough defining a melt flow path and a sealing edge (136, 304), said aperture (132, 252, 279) receiving a sealing post (124, 184, 520) adjacent said nozzle gate (28, 28') therein, said sealing edge (136, 304) of said shutter abutting said sealing post (124, 184, 520) in said second position to inhibit flow of melt and said sealing edge (136, 304) being distal said sealing post (124, 184, 520) in said first position,

2. The valve gating apparatus defined in claim 1 wherein said means to move is further operable to move said shutter (128, 184, 250, 275, 520) to a position intermediate said first and second positions to throttle melt flow through said nozzle gate (28, 28').

3. The valve gating apparatus defined in claim 1 or 2, wherein said aperture (132, 252, 279) is substantially rectangular and said sealing edge (136, 304) is a straight edge.

4. The valve gating apparatus defined in claim 1 or 2 wherein said sealing edge (304) of said aperture is semicircular and said sealing post includes a complementary semicircular surface (300) against which said sealing surface abuts in said second position.

5. The valve gating apparatus of any one of claims 1 to 4, wherein said shutter (128, 250, 275) includes at least two apertures (132, 252, 279) for gating a corresponding number of injection nozzles, each said aperture (132, 252, 279) receiving a respective sealing post associated with a corresponding nozzle and said sealing edge of each said aperture abutting each respective sealing post in said second position.

6. The valve gating apparatus defined in claim 5 wherein said sealing edge of each said aperture is semicircular and each said sealing post includes a complementary semicircular surface against which said sealing surface abuts in said second position.

7. The valve gating apparatus as defined in any one of claims 1 to 6 wherein said nozzle gate is circular.

8. The valve gating apparatus as defined in any one of claims 1 wherein said sealing edge includes an inclined portion to cut said melt material as said shutter is moved into said second position.

9. The valve gating apparatus as defined in any one of claims 1 to 8 wherein said nozzle includes two melt channels (508, 512) and wherein said means to move can position said shutter (516) intermediate said first and second positions such that a first melt channel (508) is in fluid communication with said mold cavity (40) and said flow of melt from said second melt channel (512) is inhibited.

10. The valve gating apparatus according to claim 1 further including a second shutter (192) with an aperture therethrough and a sealing post (184) on a mold cavity plate (188) adjacent the entrance to said mold cavity on the opposite side of said nozzle from said sealing post (124) adjacent said nozzle, said second shutter including a sealing edge to abut said second sealing post in said second position and said means to move operable to move said shutter and said second shutter in reciprocal directions between said first and second positions.

11. The valve gating apparatus of claim 10 wherein said shutter (128) is formed of a material with thermal insulating properties and said second shutter (192) is formed of a material with thermal transmissive properties.

12. The valve gating apparatus as defined in any one of claims 1 to 11, wherein said sealing edge is wedge shaped to cut said melt material as said shutter is moved into said second position.

13. The valve gating apparatus according to claim 12, wherein said wedge shaped sealing edge comprises at least one inclined portion, said inclined portion being oriented so as to direct melt displaced by the closing of said shutter (52) into mold cavity (40).

14. The valve gating apparatus according to claim 12 or 13, wherein said wedge shaped sealing edge comprises at least one inclined portion, said inclined portion being oriented so as to direct melt displaced by the closing of said shutter (52) into said nozzle assembly (24).

## Patentansprüche

1. Verschlussangussvorrichtung für eine Spritzgieß-Düseneinheit (24, 24') einschließlich eines Schmelzekanals (38) und eines Düsenanschnitts (28, 28'), wobei die Verschlussangussvorrichtung zwischen dem Düsenanschnitt (28, 28') und einem Formnest (40) positioniert ist, umfassend:
mindestens einen Verschlussschieber (128, 192, 250, 275, 516), der zwischen einer ersten Stellung, bei der der Anschnitt (28, 28') in Flüssigkeitsverbindung mit dem Formnest (40) steht, und einer zweiten Stellung, bei der der Verschlussschieber (128, 192, 250, 275, 516) das Ausfließen der Schmelzmasse aus dem Düsenanschnitt (28, 28') verhindert, bewegbar ist;
Mittel, um den Verschlussschieber (128, 192, 250, 275, 516) zwischen der ersten und zweiten Stellung im Wesentlichen senkrecht zu der Richtung zu bewegen, in der die Schmelze durch den Düsenanschnitt (28, 28') fließt,
**dadurch gekennzeichnet, dass** der Verschlussschieber (128, 192, 250, 275, 516) einen Körper mit einer durch ihn führenden Öffnung (132, 252, 279), die den Fließweg der Schmelze definiert und eine Dichtkante (136, 304) umfasst, wobei die Öffnung (132, 252, 279) in sich einen an den Düsenanschnitt (28, 28') angrenzenden Dichtblock (124, 184, 520) aufnimmt; wobei die Dichtkante (136, 304) des Verschlussschiebers in der zweiten Stellung an den Dichtblock (124, 184, 520) andrückt, um den Fluss der Schmelze zu verhindern; und wobei die Dichtkante (136, 304) in der ersten Stellung vom Dichtblock (124, 184, 520) entfernt ist.

2. Verschlussangussvorrichtung nach Anspruch 1, wobei die Bewegungsmittel außerdem so arbeiten können, dass sie den Verschlussschieber (128, 192, 250, 275, 516) in eine zwischen der ersten und zweiten Stellung liegende Stellung bewegen, um den Fluss der Schmelze durch den Düsenanschnitt (28, 28') zu drosseln.

3. Verschlussangussvorrichtung nach Anspruch 1 oder 2, wobei die Öffnung (132, 252, 279) im Wesentlichen rechteckig und die Dichtkante (136, 304) gerade ist.

4. Verschlussangussvorrichtung nach Anspruch 1 oder 2, wobei die Dichtkante (304) der Öffnung halbkreisförmig ist und der Dichtblock eine dazu passende halbkreisförmige Oberfläche (300) einschließt, an die die Dichtfläche in der zweiten Stellung andrückt.

5. Verschlussangussvorrichtung nach irgendeinem der Ansprüche 1 bis 4, wobei der Verschlussschieber (128, 250, 275) mindestens zwei Öffnungen (132, 252, 279) für Anschnitte einer entsprechenden Anzahl von Spritzdüsen einschließt, wobei jede Öffnung (132, 252, 279) einen jeweils zu einer entsprechenden Düse gehörenden Dichtblock aufnimmt und die Dichtkante jeder Öffnung in der zweiten Stellung an den jeweiligen Dichtblock andrückt.

6. Verschlussangussvorrichtung nach Anspruch 5, wobei die Dichtkante jeder Öffnung halbkreisförmig ist und jeder Dichtblock eine dazu passende halbkreisförmige Oberfläche einschließt, an die die Dichtfläche in der zweiten Stellung andrückt.

7. Verschlussangussvorrichtung nach irgendeinem der Ansprüche 1 bis 6, wobei der Düsenanschnitt kreisförmig ist.

8. Verschlussangussvorrichtung nach irgendeinem der Ansprüche 1 bis 7, wobei die Dichtkante einen schrägen Teil zum Schneiden der Schmelzmasse einschließt, während der Verschlussschieber in die zweite Stellung bewegt wird.

9. Verschlussangussvorrichtung nach irgendeinem der Ansprüche 1 bis 8, wobei die Düse zwei Schmelzekanäle (508, 512) einschließt und wobei die Bewegungsmittel den Verschlussschieber (516) so zwischen der ersten und zweiten Stellung positionieren können, dass der erste Schmelzekanal (508) in Flüssigkeitsverbindung mit dem Formnest (40) steht und der Fluss der Schmelze aus dem zweiten Schmelzekanal (512) verhindert wird.

10. Verschlussangussvorrichtung nach Anspruch 1, zusätzlich einschließend einen zweiten Verschlussschieber (192) mit einer Öffnung dadurch und einen Dichtblock (184) an einer Formnestplatte (188), der an die Eintrittstelle zum Formnest angrenzt und an der entgegengesetzten Düsenseite des an die Düse angrenzenden Dichtblocks (124) liegt, wobei der zweite Verschlussschieber eine Dichtkante einschließt, die in der zweiten Stellung an den zweiten Dichtblock andrückt, und die Bewegungsmittel so arbeiten können, dass sie den Verschlussschieber und den zweiten Verschlussschieber in wechselseitiger Richtung zwischen der ersten und zweiten Stellung bewegen.

11. Verschlussangussvorrichtung nach Anspruch 10, wobei der Verschlussschieber (128) aus einem Werkstoff mit wärmeisolierenden Eigenschaften und der zweite Verschlussschieber (192) aus einem Werkstoff mit wärmedurchlässigen Eigenschaften besteht.

12. Verschlussangussvorrichtung nach irgendeinem der Ansprüche 1 bis 11, wobei die Dichtkante keilförmig ist, um die Schmelzmasse zu schneiden, während der Verschlussschieber in die zweite Stellung bewegt wird.

13. Verschlussangussvorrichtung nach Anspruch 12, wobei die keilförmige Dichtkante mindestens einen schrägen Teil umfasst, der so ausgerichtet ist, dass er die durch Schließen des Verschlussschiebers (52) verdrängte Schmelze in das Formnest (40) lenkt.

14. Verschlussangussvorrichtung nach Anspruch 12 oder 13, wobei die keilförmige Dichtkante mindestens einen schrägen Teil umfasst, der so ausgerichtet ist, dass er die durch Schließen des Verschlussschiebers (52) verdrängte Schmelze in die Düseneinheit (24) lenkt.

## Revendications

1. Dispositif d'entrée à obturateur pour un ensemble à buse de moulage par injection (24, 24') comprenant un canal pour matière fondue (38) et une entrée de buse (28, 28'), ledit dispositif d'entrée à obturateur étant positionné entre l'entrée de buse (28, 28') et une cavité de moule (40), comprenant :
au moins un obturateur (128, 192, 250, 275, 516) mobile entre une première position dans laquelle ladite entrée (28, 28') est en communication fluidique avec ladite cavité de moule (40) et une deuxième position dans laquelle ledit obturateur (128, 192, 250, 275, 516) empêche tout écoulement de matière fondue depuis ladite entrée de buse (28, 28');
un moyen pour déplacer ledit obturateur (128, 192, 250, 275, 516) substantiellement perpendiculairement à la direction de l'écoulement de matière fondue à travers ladite entrée de buse (28, 28') entre lesdites première et deuxième positions,
**caractérisé en ce que** ledit obturateur (128, 192, 250, 275, 516) comprend un corps doté d'une ouverture (132, 252, 279) le traversant définissant un chemin d'écoulement de matière fondue et un bord de fermeture hermétique (136, 304), ladite ouverture (132, 252, 279) recevant en son sein un ergot de fermeture hermétique (124, 184, 520) adjacent à ladite entrée de buse (28, 28'), ledit bord de fermeture hermétique (136, 304) dudit obturateur butant contre ledit ergot de fermeture hermétique (124, 184, 520) dans ladite deuxième position pour empêcher tout écoulement de matière fondue et ledit bord de fermeture hermétique (136, 304) étant distant dudit ergot de fermeture hermétique (124, 184, 520) dans ladite première position.

2. Dispositif d'entrée à obturateur selon la revendication 1, dans lequel ledit moyen de déplacement peut fonctionner en outre pour déplacer ledit obturateur (128, 192, 250, 275, 516) à une position intermédiaire entre lesdites première et deuxième positions pour réguler par étranglement l'écoulement de matière fondue à travers ladite entrée de buse (28, 28').

3. Dispositif d'entrée à obturateur selon la revendication 1 ou 2, dans lequel ladite ouverture (132, 252, 279) est substantiellement rectangulaire et ledit bord de fermeture hermétique (136, 304) est un bord droit.

4. Dispositif d'entrée à obturateur selon la revendication 1 ou 2, dans lequel ledit bord de fermeture hermétique (304) de ladite ouverture est semi-circulaire et ledit ergot de fermeture hermétique comprend une surface semi-circulaire complémentaire (300) contre laquelle ladite surface de fermeture hermétique bute dans ladite deuxième position.

5. Dispositif d'entrée à obturateur selon l'une quelconque des revendications 1 à 4, dans lequel ledit obturateur (128, 250, 275) comprend au moins deux ouvertures (132, 252, 279) pour obturer l'entrée d'un nombre correspondant de buses d'injection, chaque dite ouverture (132, 252, 279) recevant un ergot de fermeture hermétique respectif associé à une buse correspondante et ledit bord de fermeture hermétique de chaque dite ouverture butant contre chaque ergot de fermeture hermétique respectif dans ladite deuxième position.

6. Dispositif d'entrée à obturateur selon la revendication 5, dans lequel ledit bord de fermeture hermétique de chaque dite ouverture est semi-circulaire et chaque dit ergot de fermeture hermétique comprend une surface semi-circulaire complémentaire contre laquelle ladite surface de fermeture hermétique bute dans ladite deuxième position.

7. Dispositif d'entrée à obturateur selon l'une quelconque des revendications 1 à 6, dans lequel ladite entrée de buse est circulaire.

8. Dispositif d'entrée à obturateur selon l'une quelconque des revendications 1 à 7, dans lequel ledit bord de fermeture hermétique comprend une portion inclinée pour couper ladite matière fondue pendant que ledit obturateur est déplacé dans ladite deuxième position.

9. Dispositif d'entrée à obturateur selon l'une quelconque des revendications 1 à 8, dans lequel ladite buse comprend deux canaux pour matière fondue (508, 512) et dans lequel ledit moyen de déplacement peut positionner ledit obturateur (516) à une position intermédiaire entre lesdites première et deuxième positions de sorte qu'un premier canal pour matière fondue (508) est en communication fluidique avec ladite cavité de moule (40) et ledit écoulement de matière fondue provenant dudit deuxième canal pour matière fondue (512) est bloqué.

10. Dispositif d'entrée à obturateur selon la revendication 1, comprenant en outre un deuxième obturateur (192) doté d'une ouverture le traversant et un ergot de fermeture hermétique (184) sur une plaque de cavité de moule (188) à proximité de l'entrée de ladite cavité de moule du côté opposé de ladite buse par rapport audit ergot de fermeture hermétique (124) à proximité de ladite buse, ledit deuxième obturateur comprenant un bord de fermeture hermétique pour buter contre ledit deuxième ergot de fermeture hermétique dans ladite deuxième position et ledit moyen de déplacement pouvant fonctionner pour déplacer ledit obturateur et ledit deuxième obturateur dans des directions réciproques entre lesdites première et deuxième positions.

11. Dispositif d'entrée à obturateur selon la revendication 10, dans lequel ledit obturateur (128) est réalisé à partir d'un matériau ayant des propriétés d'isolation thermique et ledit deuxième obturateur (192) est réalisé à partir d'un matériau ayant des propriétés de transmission thermique.

12. Dispositif d'entrée à obturateur selon l'une quelconque des revendications 1 à 11, dans lequel ledit bord de fermeture hermétique est en forme de coin pour couper ladite matière fondue pendant que ledit obturateur est déplacé dans ladite deuxième position.

13. Dispositif d'entrée à obturateur selon la revendication 12, dans lequel ledit bord de fermeture hermétique en forme de coin comprend au moins une portion inclinée, ladite portion inclinée étant orientée de façon à diriger la matière fondue déplacée par la fermeture dudit obturateur (52) dans la cavité de moule (40).

14. Dispositif d'entrée à obturateur selon la revendication 12 ou 13, dans lequel ledit bord de fermeture hermétique en forme de coin comprend au moins une portion inclinée, ladite portion inclinée étant orientée de façon à diriger la matière fondue déplacée par la fermeture dudit obturateur (52) dans ledit ensemble à buse (24).
